**Europäisches Patentamt**

**European Patent Office**

**Office européen des brevets**

(19)

(11) Publication number : **0 422 547 B1**

(12)

# EUROPEAN PATENT SPECIFICATION

(45) Date of publication of patent specification :
19.04.95 Bulletin 95/16

(51) Int. Cl.⁶ : **G11B 5/64,** G11B 5/704,
G11B 5/72

(21) Application number : **90119242.7**

(22) Date of filing : **08.10.90**

(54) **Magnetic recording medium.**

(30) Priority : **09.10.89 JP 262202/89**

(43) Date of publication of application :
**17.04.91 Bulletin 91/16**

(45) Publication of the grant of the patent :
**19.04.95 Bulletin 95/16**

(84) Designated Contracting States :
**DE NL**

(56) References cited :
**US-A- 4 735 840**
**JOURNAL OF APPLIED PHYSICS. vol. 61, no.
15, April 15, 1987, NEW YORK US pages 4025 -
4027; D.J. SEAGLE ET AL.: 'INFLUENCE OF
SUBSTRATE TEXTURE ON RECORDING-
PARAMETERS FOR CoNiCr RIGID DISK
MEDIA '**
**PATENT ABSTRACTS OF JAPAN vol. 13, no.
91 (P-837) March 3, 1989 & JP-A-63 273 208
(HOYA CORP ) November 10, 1988**

(73) Proprietor : **NIHON SHINKU GIJUTSU
KABUSHIKI KAISHA
2500, Hagizono
Chigasaki-shi Kanagawa-ken (JP)**

(72) Inventor : **Tani, Noriaki**
**c/o Nihon Shinku Gijutsu K.K.,**
**No. 2500 Hagizono**
**Chigasaki-shi, Kanagawa-ken (JP)**
Inventor : **Nakamura, Kyuzo**
**c/o Nihon Shinku Gijutsu K.K.,**
**No. 2500 Hagizono**
**Chigasaki-shi, Kanagawa-ken (JP)**
Inventor : **Ishikawa, Michio**
**c/o Nihon Shinku Gijutsu K.K.,**
**No. 2500 Hagizono**
**Chigasaki-shi, Kanagawa-ken (JP)**
Inventor : **Hashimoto, Masanori**
**c/o Nihon Shinku Gijutsu K.K.,**
**No. 2500 Hagizono**
**Chigasaki-shi, Kanagawa-ken (JP)**
Inventor : **Ota, Yoshifumi**
**c/o Nihon Shinku Gijutsu K.K.,**
**No. 2500 Hagizono**
**Chigasaki-shi, Kanagawa-ken (JP)**

(74) Representative : **Schmidt-Evers, Jürgen,
Dipl.-Ing. et al
Patentanwälte Mitscherlich & Partner
Postfach 33 06 09
D-80066 München (DE)**

## Description

## BACKGROUND OF THE INVENTION

This invention relates to a magnetic recording medium, and in particular to a longitudinal magnetic recording medium having a high recording density.

A magnetic recording medium in which a film of Cr, W or Mo or an alloy film consisting essentially of one of these metals is formed, by vapor deposition or sputtering, as a sublayer on a non-magnetic substrate, and in which a Co film or a Co-alloy film is formed on top of the sublayer, is widely used as a hard disc medium capable of high-density recording. In this hard disk recording medium, the memory is reproduced by a magnetic head flying over the recording medium which is rotated at a high speed. In this connection, it is known that if the flying height of the magnetic head can be reduced, the recording density is consequently increased.

Conventional hard disc substrates which are widely used are: a metallic substrate such as an A1-substrate having a non-magnetic metallic plating thereon, or an "ALMITE"-substrate, or a glass substrate.

By performing a so-called texturing treatment so as to provide a multitude of fine concentric grooves on the surface of the metallic substrate, the coefficient of friction of the recording medium is made smaller as a result of decreasing the effective area of contact between the substrate and the magnetic head. In addition, it is common practice to be able to manufacture with a metallic substrate a disk having circular magnetic anisotropy in the magnetic layer characterized by good squareness of the hysteresis loop in the circular direction.

However, when a metallic substrate is used, the disk surface cannot be made completely smooth due to protrusions, minute undulations, or other irregularities attributable to the presence of intermetallic compounds or defects. Therefore, when the flying height of the magnetic head is reduced, a so-called phenomenon of head crushing occurs in which the magnetic head and the protrusions on the disk collide with each other, resulting in breakage of the magnetic recording medium. Even in the case where the above-mentioned texture-treated substrate is used, this kind of undulations and protrusions cannot be completely removed and, consequently, head crushing is also likely to occur. Therefore, with a magnetic recording medium using a metallic substrate, the flying height of the magnetic head cannot be made small enough, consequently limiting the extent to which the recording density could be increased.

On the other hand, when a glass substrate is used, greater smoothness can be obtained than when a metallic substrate is used. However, the magnetic head and the disk tend to adhere to each other, resulting in a high coefficient of friction and, in an extreme case, the magnetic head and the disk become stuck together so that the disk can no longer be rotated. In order to lower the coefficient of friction, it is also known to texture-treat the glass substrate. In this case, however, because magnetic anisotropy in the, circular direction of the disk cannot be obtained, the squareness of the hysteresis loop is poor, which makes the disk unsuitable for high-density recording. Further, when a glass substrate is used, the coercive force of the magnetic recording film which can be obtained is small and, because glass is an electrically insulating body, it cannot be charged with a substrate bias which is one of the means of increasing the coercive force, thus making such a disk unsuitable for high-density recording.

In Journal of Applied Physics, 61, (1987), 4025-4027 is disclosed a magnetic recording disc comprising a AL substrate, on which an electroless NiP-film is plated on. This film has a thickness of the nickel layer of 12.7 $10^{-6}$ m, provided thereon at first a chromium layer with a thickness of 0.2-0.25 $10^{-6}$ m and then a magnetic layer that consists essentially of cobalt with a thickness of 0.05-0.075 $10^{-6}$ m. The magnetic layer then is sealed with a carbon protective layer. Both the chromium layer and the magnetic layer are laid on the substrate by a sputtering process.

In US-A-4,735,840 is disclosed a memory disk comprising a glass substrate coated with chromium with preferably a layer of cobalt/nickel as the magnetic layer sealed with a protective coating of carbon. As a result of circumferential texturing, a circular anisotropic crystal growth has occured during the sputtering with a circumferential alignment that provides an improved memory disk having a reduced amplitude modulation, an improved squareness of the hysteresis loop, e.g. lower switching field distribution and a high production relatively low cost production system.

In JP-A-63-273208 is disclosed a recording medium improved by laminating an underlying layer and a magnetic layer consisting of cobalt, nickel and tungsten on a nonmagnetic base and specifying the content of the tungsten contained in the magnetic layer. The nonmagnetic underlying layer consisting of chromium is formed by sputtering on the nonmagnetic glass base. The magnetic layer consisting of the cobalt, nickel and tungsten is then formed by sputtering on the nonmagnetic underlying layer and further, a protective film consisting of carbon is laminated on the magnetic layer to form the magnetic recording medium.

As has been explained above, prior to the invention there was no magnetic recording medium which met all the conditions which would make it suitable for high-density recording.

## SUMMARY OF THE INVENTION

An object of this invention is to provide a magnetic recording medium in which all the above-mentioned conditions which make it suitable for high-density recording are met, such conditions being smoothness of the surface, a shape enabling the reduction of the coefficient of friction, so-called circular magnetic anisotropy in the magnetic layer characterized by good squareness of the hysteresis loop in the circular direction, and a large coercive force.

The magnetic recording medium of the invention comprises a non-magnetic substrate disk, at least one magnetic layer and at least one protective layer, the magnetic layer and the protective layer being formed in succession on the non-magnetic substrate disk, wherein the non-magnetic substrate disk comprises a glass substrate and at least one non-magnetic metallic film provided on the glass substrate, and the non-magnetic metallic film is provided on a surface thereof with a multitude of fine concentric grooves.

## BRIEF DESCRIPTION OF THE DRAWINGS

Fig. 1 is a perspective view showing the overall construction of an embodiment of the magnetic recording medium of this invention.

Fig. 2 is a sectional view taken along the line A-A of Fig. 1.

Fig. 3 is a diagram showing the relationship between the flying height of a magnetic head and the frequency of the crushing of the head against a disk.

## DETAILED DESCRIPTION OF THE INVENTION

The magnetic recording medium of this invention is made by first forming by vapor deposition or sputtering, on a glass substrate having a smooth surface, a non-magnetic metallic film consisting essentially of one of the following metallic materials: NiP, Ti, Al, Cr, Cu, Mo, Ta, or W, or the like; or an alloy consisting essentially of one of the above-mentioned metallic materials; or a stainless steel, and then performing texture-treating of the non-magnetic metallic film. Then, the manufacture of the magnetic recording medium of this invention, which is capable of high-density recording, is completed by forming in succession, on the substrate disk thus formed and by vapor deposition or sputtering in vacuum, first a sublayer comprising a film of Cr, W or Mo or an alloy film consisting essentially of Cr, W or Mo, then a magnetic layer comprising a Co film or a Co-alloy film consisting essentially of Co, and then a protective layer comprising a C film, a $SiO_2$ film, a $ZrO_2$ film, or the like. It is preferable that the thickness of the non-magnetic metallic film be in the range of not less than 0.03 $\mu$m (i.e., micron) and not more than 5 $\mu$m.

In the magnetic recording medium of this invention, which has the above-mentioned construction, in particular the above-mentioned construction of the non-magnetic substrate, the advantageous surface characteristics of the glass substrate disk (i.e., very smooth surface without protrusions or undulations) are retained. Therefore, the flying height of the magnetic head can be made very small, resulting in an increase in the recording density. In addition, appropriate surface characteristics can be obtained so that no adhesion occurs between the magnetic head and the surface of the recording medium, and a coefficient of friction which is close to the one at the time of sliding can be maintained. Furthermore, by performing the texturing treatment of the surface of the non-magnetic metallic film, so-called circular magnetic anisotropy which is characterized by good squareness of the hysteresis loop in the circular direction can be obtained in the magnetic layer which is formed on the non-magnetic metallic film. Still furthermore, a glass substrate which is an electrically insulating body if used alone, can be made electrically conductive when it is used in the form of a substrate disk of this invention. Therefore, by using the process of charging the substrate with a negative bias, a high coercive force in the magnetic characteristics of the recording medium can be obtained.

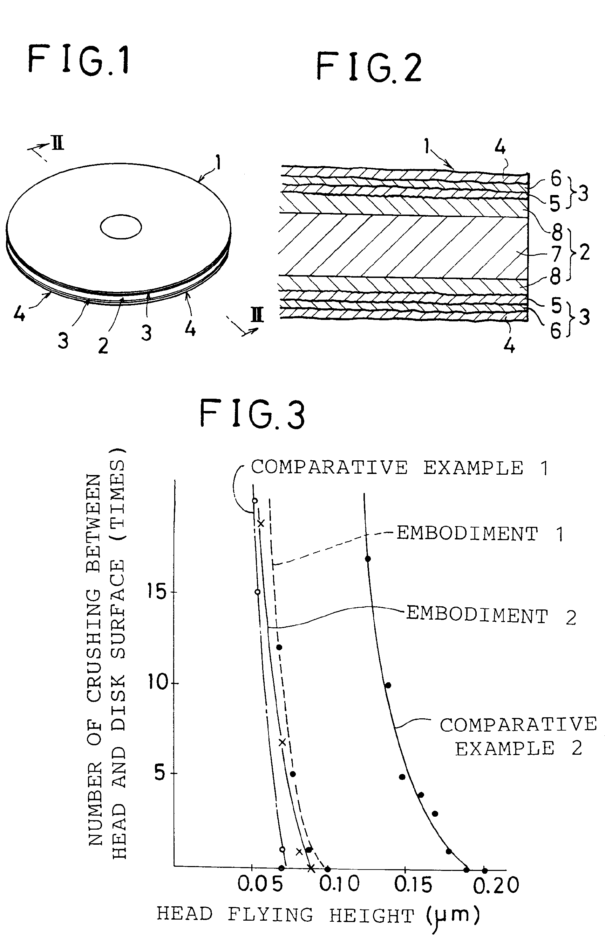

A preferred embodiment of the magnetic recording medium of this invention is explained below by reference to the drawings in Figures 1 and 2.

As shown in Figs. 1 and 2, the magnetic recording medium 1 comprises a non-magnetic substrate disk 2, magnetic layers 3 formed on the substrate disk 2, and protective layers 4 formed on the magnetic layers 3. Each of the magnetic layers 3 comprises a sublayer 5 of a film of Cr, W or Mo or an alloy film consisting essentially of Cr, W, or Mo, and a main magnetic layer 6 which comprises a Co film or a Co-alloy film consisting essentially of Co and which is formed on the sublayer 5.

The non-magnetic substrate disk 2 comprises a glass substrate 7 having a smooth surface, and a non-magnetic metallic film 8 which is formed on the glass substrate 7 and which has a thickness in the range of not less than 0.03 $\mu$m and not more than 0.5 $\mu$m. This non-magnetic metallic film 8 is formed of the one of following metallic materials: NiP, Ti, Al, Cr, Cu, Mo, Ta, or W; or an alloy consisting essentially of one of the above-mentioned metallic materials; or a stainless steel.

On the surface of the non-magnetic metallic film 8, a multitude of concentric grooves, i.e., texturing, are provided. As a result of the texturing, minute concentric irregularities (projections and depressions) are formed also on the surface of the magnetic recording medium 1.

The following is a description of the actual manufacturing of the above-mentioned magnetic recording medium. First, smooth glass substrates having a surface roughness Ra (average roughness) of 0.002 μm were placed inside a treatment chamber. After evacuating the treatment chamber to $6.65 \cdot 10^{-4}$ Pa ($5 \times 10^{-6}$) Torr or below, argon gas was introduced thereinto to bring the treatment chamber to $2.66 \cdot 10^{-1}$ Pa ($2 \times 10^{-3}$ Torr). By a DC magnetron sputtering method, NiP films of various thicknesses of 0.02, 0.03, 0.1, 0.5, 1, 5 and 10 μm were formed respectively on the glass substrates. Thereafter, the glass substrates (coated on both sides with the NiP films) were taken out of the treatment chamber into the atmosphere, and were subjected to texturing treatment by buffing them in succession with buffing tapes of roughness Nos. 6000 ("Imperial Lapping Film, particle size 3 μm [microns]" produced by Sumitomo 3M Ltd. of Japan) and 15000 ("WA 15000", corresponding to particle size 0.3 μm [microns], produced by Nippon Micro-Coating Co., Ltd. of Japan), respectively, using a texturing apparatus. The substrates were then washed and dried, thereby providing non-magnetic substrate disks for the magnetic recording medium of this invention.

Each of these substrate disks was placed inside the vacuum treatment chamber. After the vacuum chamber was evacuated to a pressure of $1.33 \cdot 10^{-4}$ Pa ($1 \times 10^{-6}$ Torr) or below and the substrate temperature was heated to 280° C, argon gas was introduced into the chamber to bring the pressure therein to $2.66 \cdot 10^{-1}$ Pa ($2 \times 10^{-3}$ Torr). A Cr film was then formed on each of the substrate disks to a thickness of 150 nm (1500 Å) by a DC magnetron sputtering method. Then, a Co-alloy film containing 20 at% of Ni and 10 at% of Cr (the balance consisting essentially of Co) was formed in succession to a thickness of 70 nm (700 Å) on each of the substrates disks. Negative voltage of 300V was charged to the substrate when the Cr film and CoNiCr film were formed. A carbon film as a protective layer was further formed on top of the CoNiCr film to a thickness of 30 nm (300 Å), thereby completing the manufacture of an embodiment of the magnetic recording medium of this invention.

The surface conditions of each of the substrate disks after texturing with the various NiP thicknesses in the above-mentioned examples were observed. The frequency of head crushing with the recording medium manufactured with the above-mentioned substrate disks was also observed, using a CSS (contact-start-and-stop) testing apparatus. The surface conditions were visually checked. The frequency of head crushing was obtained by counting the number of signals generated when a piezoelectric element mounted on the magnetic head crushes a recording medium which is rotated at a flying height of the head of 0.1 μm, i.e., the frequency of crushing of the magnetic head against the projections on the surface of the recording medium. The results are shown in Table 1.

## TABLE 1

| NiP film thickness (μm) | Surface conditions after texturing treatment | Frequency of crushing of magnetic head against disk (times) |
|---|---|---|
| 0.02 | Not uniform, partially peeled off | very frequent |
| 0.03 | almost uniform | 0 |
| 0.1 | uniform, good | 0 |
| 0.5 | uniform, good | 0 |
| 1 | uniform, good | 0 |
| 5 | uniform, good | 1 |
| 10 | uniform, good | 5 |

As seen from Table 1, when the NiP film thickness is 0.02 μm, the film is so thin that partial peeling-off takes place and consequently a uniform textured surface cannot be obtained, resulting in frequent head crushing. However, with film thicknesses of 0.03 μm and above, good and uniform textured surfaces can be obtained. If the film thicknesses are 10 μm and above, on the other hand, the frequency of crushing between the magnetic head and the disk increases, despite the presence of good and uniform textured surfaces. The reason for this increase seems to be due to the fact that, because the NiP film is too thick, the smooth surface characteristics of the original glass substrate can no longer be reflected (or reproduced) in the NiP film which has minute undulations or protrusions due to abnormal growth.

Judging from the above results, the non-magnetic metallic film on the glass substrate of the magnetic recording medium of this invention preferably should have a thickness in the range of not less than 0.03 μm and not more than 5 μm.

Specific embodiments of this invention as well as comparative examples are described below.

Embodiment 1

Embodiment 1 is magnetic recording medium having a NiP film of a thickness of 0.5 μm as a non-magnetic metallic film, and manufactured according to the above-described manufacturing method.

**Embodiment 2**

Instead of a NiP Film, a Ti film was formed in a thickness of 0.2μm. Texturing was performed with buffing tapes of roughness Nos. 3000 ("Imperial Lapping Film, particle size 5 microns" produced by Sumitomo 3M Ltd. of Japan) and 10000 ("Imperial Lapping Film, particle size 1 micron" produced by Sumitomo 3M Ltd. of Japan). The other conditions are the same as in Embodiment 1.

**Comparative Example 1**

A smooth glass substrate having a surface roughness Ra of 0.002 μm was made, as such, into a hard disk substrate.

**Comparative Example 2**

A commercially available hard disk substrate comprising a NiP plating of a thickness of 15 μm on Al, wherein the surface of the NiP plating was texture-treated and mirror-finished, was used as a substrate disk.

Using the recording media of the above-mentioned Embodiments 1 and 2 and Comparative Examples 1 and 2, measurements were made of the frequency of crushing between the magnetic head and the recording medium as the flying height of the magnetic head was reduced. The results are shown in Fig. 3.

As seen from Fig. 3, in the case of Comparative Example 2, when the flying height of the magnetic head is reduced to less than 0.15 μm, the frequency of crushing between the magnetic head and the disk rapidly increases. On the other hand, in the case of Embodiments 1 and 2 and Comparative Example 1, there is no crushing between the magnetic head and the disk until the flying height is reduced to 0.09 μm. This is due to the fact that, as previously explained, in the case of Comparative Example 2 the original Al-susbstrate plated with NiP has minute undulations or protrusions which cannot be completely removed even after texturing treatment.

Next, the following measurements were made on each of the recording media of the Embodiments and the Comparative Examples: coercive force as measured by a vibrating sample magnetometer; squareness in the hysteresis loop in the circular direction; friction coefficients after 10,000 times of CSS test measured by the CSS testing apparatus; and linear recording densities $D_{50}$ (recording density at which the output becomes 50%) measured at a flying height at which the magnetic head can be stably flown without crushing against the disk. The results are shown in Table 2.

TABLE 2

| Substrate | Coercive force Kk m$^{-1}$[(Oe)] | Squareness of hysteresis loop in circular direction | Coefficient of friction after 10000 times CSS test | D$_{50}$* [(KFRPI)**] FRPM*** |
|---|---|---|---|---|
| Embodiment 1 | 128 [1600] | 0.90 | 0.24 | 1524 [60] |
| Embodiment 2 | 118,4 [1480] | 0.89 | 0.21 | 1448 [57] |
| Comparative Example 1 | 76,8 [960] | 0.77 | 2 or over | 1422 [56] |
| Comparative Example 2 | 130,4 [1630] | 0.92 | 0.23 | 787 [31] |

* Value measured at flying height of magnetic head when it is stably flown above disk. (Comparative Example 2 at flying height of 0.2 $\mu$m, and the remaining at 0.10 $\mu$m.)

** Kilo Flux Return per Inch.

*** Flux Return per Meter

As seen from Table 2, with substrate disks characterized by surfaces which are of a metallic material and by circumferential texturing treatment, as in Embodiments 1, 2 and comparative Example 2, the coercive forces of the recording media are high and the squareness of the hysteresis loop in the circular direction is large. Consequently, magnetic characteristics suitable for high density recording can be obtained. However, since it is impossible to secure a stable flying height in comparative Examples 2 as previously explained, it is clear that Embodiment 1 is far superior in characteristics for high-density recording when the D$_{50}$ values are compared. In addition, in the case of Comparative Example 1, the substrate surface in too smooth and the coefficient of friction after 10,000 times of CSS test exceeds 2. Therefore, it is impossible in practice to use the magnetic recording mediun of comparative Example 1 in view of its lack of durability. Additionally, the magnetic characteristics of the recording medium of Comparative Example 1 are poor, in that it is possible to obtain a D$_{50}$ value of only 1422FRPM [56 KFRP] due to a small coercive force, and the hysteresis loop in the circular direction has a poor squareness.

The above results show that the magnetic recording media manufactured with the substrate disks according to the Embodiments 1 and 2 of this invention are most suitable as highly reliable high-density magnetic recording media.

The above described substrate disks can also be used as substrate disks for perpendicular magnetic recording systems using Co-Cr or Co-Re-P as a magnetic recording layer.

As described above, the magnetic recording medium according to this invention has surface characteristics which make possible the operation of the magnetic head at a stable and small flying height and with a small coefficient of friction. The magnetic recording medium of this invention also has a circular magnetic anisotropy, a high coercive force, and superior high-density recording characteristics.

**Claims**

1. A magnetic recording medium comprising a non-magnetic substrate disk (2),
   at least one magnetic layer (3), and
   at least one protective layer (4),
   said magnetic layer and said protective layer being formed in succession on the non-magnetic substrate disk,
   wherein the non-magnetic substrate disk (2) comprises

6

a glass substrate (7) having a smooth surface and

at least one electrically conductive non-magnetic metallic film (8) provided by vapor deposition or sputtering in vacuum on the surface of the glass substrate (7),

the non-magnetic metallic film (8) having a thickness in the range of not less than 0.03μm and not more than 5μm and being provided on a surface thereof with a multitude of fine concentric grooves by texturing treatment,

the magnetic layer (3) to be provided on the surface of the non-magnetic metallic film (8) comprising

a sublayer (5), provided by vapor deposition or sputtering in vacuum, of a film of Cr, W or Mo or an alloy film consisting essentially of Cr, W or Mo, and

a main magnetic layer (6), provided by vapor deposition or sputtering in vacuum on the sublayer (5), of a Co film or a Co-alloy film consisting essentially of Co,

said protective layer (4) being provided on the main magnetic layer (6).

## Patentansprüche

1. Magnet-Aufzeichnungsmedium mit
einer unmagnetischen Substratplatte (2),
zumindest einer Magnet-Schicht (3), und
zumindest einer Schutz-Schicht (4),
wobei die Magnet-Schicht und die Schutz-Schicht aufeinanderfolgend auf der unmagnetischen Substratplatte ausgebildet sind,
wobei die unmagnetische Substratplatte (2) ein Glas-Substrat (7), das eine glatte Oberfläche aufweist und
zumindest einen elektrisch leitenden unmagnetischen Metall-Film (8) aufweist, der mittels Dampf-Auftragen oder Sputtern in Vakuum auf der Oberfläche des Glas-Substrates (7) aufgebracht ist,
wobei der unmagnetische Metall-Film (8) eine Dicke im Bereich von nicht weniger als 0,03 μm und nicht mehr als 5 μm aufweist und auf einer Oberfläche mit einer großen Anzahl dünner konzentrischer Rillen durch Textur-Behandlung versehen ist,
wobei die auf der Oberfläche des unmagnetischen Metall-Filmes (8) vorgesehene Magnet-Schicht (3)
eine Unterschicht (5), die durch Dampf-Auftrag oder Sputtern in Vakuum aufgebracht ist und aus einem Film aus Cr, W oder Mo oder einem Legierungsfilm besteht, der im wesentlichen aus Cr, W oder Mo besteht, und
eine Haupt-Magnet-Schicht (6) aufweist, die durch Dampf-Auftrag oder Sputtern in Vakuum auf der Unterschicht (5) aufgebracht ist und aus einem Co-Film oder einem Co-Legierungsfilm besteht, der im wesentlichen aus Co besteht,
wobei die Schutz-Schicht (4) auf der Haupt-Magnet-Schicht (6) vorgesehen ist.

## Revendications

1. Milieu d'enregistrement magnétique comprenant un disque à substrat non magnétique (2),
au moins une couche magnétique (3), et
au moins une couche de protection (4),
ladite couche magnétique et ladite couche de protection étant formées successivement sur le disque à substrat non magnétique,
dans lequel le disque à substrat non magnétique (2) comprend
un substrat en verre (7) ayant une surface unie et au moins un film métallique (8) non magnétique, électroconducteur, formé par dépôt en phase vapeur ou pulvérisation sous vide sur la surface du substrat en verre (7),
le film métallique non magnétique (8) ayant une épaisseur comprise entre au moins 0,03 μm et au plus 5 μm et étant muni sur une de ses surfaces d'une multitude de fines rainures concentriques par traitement de texturation,
la couche magnétique (3) devant être formée sur la surface du film métallique non magnétique (8) comprenant
une sous-couche (5), formée par dépôt en phase vapeur ou pulvérisation sous vide, d'un film de Cr, W ou Mo ou d'un film d'alliage composé essentiellement de Cr, W ou Mo, et
une couche magnétique principale (6), formée par dépôt en phase vapeur ou pulvérisation sous vide sur la sous-couche (5), d'un film de Co ou d'un film d'alliage-Co composé essentiellement de Co, ladite couche de protection (4) étant formée sur la couche magnétique principale (6).

# FIG.1

# FIG.2

# FIG.3